# FASCICULE DE BREVET EUROPEEN

(11) **EP 0 554 182 B1**
(45) Date de publication et mention de la délivrance du brevet: **10.08.2005**
(21) Numéro de dépôt: 93400220.5
(22) Date de dépôt: 28.01.1993
(51) Int. Cl.: H04L 29/06

(54) **Procédé, appareil et dispositif de chiffrement de messages transmis entre réseaux interconnectés**
Verfahren, Gerät und Anordnung zur Verschlüsselung von Daten die über verbundene Netze übertragen werden
Method, apparatus and device for message cyphering between interconnected networks

(30) Priorité: 28.01.1992 FR 9200881
(43) Date de publication de la demande: 04.08.1993
(73) Titulaire: Electricité de France, 75008 Paris (FR)
(72) Inventeur: Vidrascu, Andrei, F-78100 Saint-Germain-En-Laye (FR); Dherbecourt, Yves Marie Jean, F-92330 Sceaux (FR); Herodin, Jean-Marc, F-91570 Bievres (FR)
(74) Mandataire: Benech, Frédéric

(56) Documents cités:
- WO-A-89/10666
- COMPUTER COMMUNICATION REVIEW. vol. 19, no. 2, Avril 1989, NEW YORK US pages 32 - 48 S.M.BELLOVIN 'SECURITY PROBLEMS IN THE TCP/IP PROTOCOL SUITE'
- D.W.DAVIES ET AL 'SECURITY FOR COMPUTER NETWORKS' 1989 , J.WILEY , NEW YORK, US
- PHILIPS TELECOMMUNICATION REVIEW. vol. 47, no. 3, Septembre 1989, HILVERSUM NL pages 1 - 19 R.C.FERREIRA 'THE SMART CARD: A HIGH SECURITY TOOL IN EDP'

## Description

La présente invention concerne un procédé de chiffrement de messages transmis entre réseaux interconnectés via des passerelles utilisant un protocole réseau déterminé, notamment et par exemple le protocole Internet (IP), un dispositif de communication de données chiffrées entre au moins deux équipements appartenant à deux réseaux différents interconnectés via des passerelles utilisant le protocole réseau déterminé, et un appareil de chiffrement mettant en oeuvre ledit procédé.

Par passerelle, il convient d'entendre un réseau ou un support intermédiaire permettant de véhiculer les messages.

Le document WO-A-89/10666 décrit un dispositif de communication de données utilisant des passerelles.

Rappelons également qu'un protocole est un ensemble de conventions ou de règles qui définissent notamment le format, les séquences, l'algorithme de détection des erreurs de transmission des données transférées, etc.

Un protocole réseau correspond quant à lui à la couche réseau niveau 3 de l'architecture en couches OSI (Norme X200) proposée par l'ISO (initiales anglosaxonnes de International Standardisation Organisation). Rappelons également que la couche réseau a pour rôle de fournir les procédures et les moyens fonctionnels nécessaires à l'échange des informations données par la couche transport OSI. Les paquets de données sont acheminés sous forme de messages comprenant des "en-têtes" accolées aux données et constitués de plusieurs segments indiquant notamment l'adresse de l'émetteur et du récepteur.

La présente invention trouve une application particulièrement importante bien que non exclusive dans le domaine de la protection des accès aux serveurs de réseaux télématiques.

On connaît déjà des dispositifs permettant de chiffrer des données transférées en série sur une ligne à basse-vitesse, par exemple selon la recommandation CCITT V24 (liaison série RS 232 à deux fils). De tels dispositifs prévoient un chiffrement intégral des messages de données transmises et de leurs en-têtes, sans souci de protocole. Ce type de dispositif, développé notamment dans le domaine bancaire, fonctionne également avec des cartes à microprocesseurs.

Il présente des inconvénients. En effet il est de portée limitée et ne permet pas, notamment, l'interconnexion et la communication des données entre deux réseaux en toute sécurité, via des passerelles non surveillées.

La présente invention vise à fournir un procédé de chiffrement de messages transmis entre réseaux interconnectés, un appareil et un dispositif mettant en oeuvre un tel procédé répondant mieux que ceux antérieurement connus aux exigences de la pratique, notamment en ce qu'elle autorise un transfert de données entre équipements connectés à ces réseaux, de façon chiffrée, en toute sécurité, tout en mettant en oeuvre un procédé simple et facilement adaptable aux protocoles et équipements existants.

Dans ce but l'invention propose notamment un procédé de chiffrement de messages transmis entre réseaux interconnectés via des passerelles utilisant un protocole réseau déterminé, caractérisé en ce que on chiffre les messages en conservant en clair la partie "en-tête" du message permettant son acheminement via lesdites passerelles.

Un tel chiffrement permet d'assurer le transfert des données en protégeant la confidentialité, sur les parties de réseau ou passerelles réputées non sûres et situées entre les réseaux considérés.

Avantageusement le protocole réseau utilisé étant le protocole Internet (IP), le procédé de chiffrement est caractérisé en ce que on chiffre les messages en conservant en clair les en-têtes IP et en chiffrant en même temps que les données, au moins une portion des en-têtes correspondant aux protocoles de transport TCP ou UDP utilisés.

Pour mémoire le protocole IP est une sous-couche de la couche réseau (couche 3) de l'architecture en couches OSI. La couche Internet convertit tout service réseau en un service datagramme et uniformise ainsi les réseaux pour la couche transport (couche 4 de l'architecture ISO).

Les protocoles TCP et UDP sont des protocoles de la couche transport ; TCP (initiales anglosaxonnes pour Transmission Control Protocol) fournit un service dit de circuit virtuel et utilise un système d'acquittement pour le contrôle d'erreurs ; UDP (initiales anglosaxonnes pour User Datagram Protocol) fournit quant à lui un support pour des protocoles transactionnels n'exigeant pas les mêmes contrôles que TCP.

Dans un mode de réalisation avantageux, le cryptosystème utilisé pour le chiffrement des messages est le système DES (initiales anglosaxonnes de Data Encryption Standard). Il s'agit d'un cryptosystème correspondant à une norme américaine et utilisant une clé de 56 bits.

Avantageusement, le système DES est utilisé en mode CBC.

Le DES (Data Encryption Standard) et son mode de fonctionnement CBC (Cipher Block Chaining) sont décrits dans les standards suivants :
- "Data Encryption Standard", Federal Information Processing Standards Publication 46,
   National Bureau of Standards, U.S. Department of Commerce, January 1977 ;
- "DES Modes of Operation", Federal Information Processing Standards Pulication 81,
   National Bureau of Standards, U.S. Department of Commerce, December 1980.

L'intérêt du mode CBC réside essentiellement dans le fait que, si une suite de valeurs identiques est chiffrée, les résultats chiffrés pour chaque valeur identique ne seront pas les mêmes.

Egalement avantageusement, on chiffre l'intégralité d'un message de données, ainsi que la portion, partielle ou totale, de l'en-tête TCP ou UDP correspondante, afin d'obtenir une chaîne de bits d'une longueur divisible par 64.

Dans un mode de réalisation avantageux le procédé est caractérisé en ce que la portion d'en-tête TCP ou UDP chiffrée comprend la partie dite "checksum".

La checksum TCP/UDP est une somme de contrôle calculée par l'émetteur du message selon l'algorithme décrit dans la norme RFC793 en fonction des données à transmettre et insérées dans le message. Les RFC (initiales anglosaxonnes pour Request For Comments) sont des documents édités par l'Internet Activies Board, qui font en général fonction de standard, et que l'on peut se procurer auprès de Government Systems, Inc., Network Information Center, 14200 Park Meadow Drive, Suite 200, Chantilly, VA 22021, U.S.A.

Le récepteur re-calcule cette somme de contrôle en fonction des données reçues. Si la valeur trouvée est différente de celle transmise dans le message, le récepteur conclut que le message reçu n'est pas valide. Il s'agit donc d'un contrôle d'intégrité. L'appareil chiffreur chiffre et déchiffre avantageusement cette somme de contrôle pour rendre impossible l'altération malveillante du message grâce au re-calcul d'une somme de contrôle correcte sur le message ainsi frauduleusement modifié. Si tel était le cas, le déchiffrement (inévitable) de la somme de contrôle rend la valeur de celle-ci incorrecte et provoque le rejet du message par le récepteur.

Ce procédé garantit donc l'intégrité des messages vis-à-vis des risques de malveillance.

L'invention propose également un procédé de traitement de messages transmis entre équipements appartenant à au moins deux réseaux interconnectés comportant chacun au moins un équipement autorisé à émettre et recevoir des messages chiffrés par le procédé de chiffrement décrit ci-dessus, caractérisé en ce que le traitement d'un message comporte les étapes suivantes:
- vérification de la présence d'une carte à mémoire d'authentification de l'opérateur du premier équipement,
- vérification du protocole utilisé entre les deux équipements, et si le protocole est le protocole réseau déterminé (par exemple le protocole TCP/IP ou UDP/IP) recherche d'une clé associée à l'équipement émetteur et d'une clé associée à l'équipement récepteur,
- si les clés existent, chiffrement du message à envoyer, et transmission du message, sinon rejet du message,
- vérification de la présence d'une carte à mémoire d'authentification de l'opérateur du second équipement,
- vérification du protocole utilisé entre les deux équipements, et si le protocole est le protocole réseau déterminé (par exemple TCP/IP ou UDP/IP) recherche d'une clé associée à l'équipement émetteur et d'une clé associée à l'équipement récepteur,
- si ces deux clés existent, déchiffrement du message reçu, sinon rejet du message.

Par clé il convient notamment d'entendre un groupe de données spécifiques prédéterminées ou calculables par un algorithme prédéterminé, prévu pour les seuls utilisateurs autorisés.

Les étapes de chiffrement et de déchiffrement utilisent chacune une clé. Pour que le déchiffrement s'effectue avec succès, il doit utiliser une clé de déchiffrement associée à la clé de chiffrement qui a été utilisée.

Dans le cas d'un algorithme de chiffrement dit symétrique, comme le DES, les clés de chiffrement et de déchiffrement doivent être identiques. Une convention permettant de déduire cette clé du couple (clé associée à l'équipement émetteur, clé associée à l'équipement récepteur) est utilisée ; cette convention peut être, par exemple, de choisir la clé associée à l'équipement émetteur, ou encore d'utiliser le résultat d'une fonction mathématique du couple des clés.

Dans le cas d'un algorithme de chiffrement dit asymétrique, les clés de chiffrement et de déchiffrement dont différentes, bien que dépendant l'une de l'autre. La convention permettant de déduire la clé de chiffrement du couple (clé associée à l'équipement émetteur, clé associée à l'équipement récepteur), différent du premier, selon la même convention.

L'invention propose également un dispositif de communication de messages de données entre au moins deux équipements associés à deux réseaux différents interconnectés via au moins une passerelle utilisant un protocole réseau déterminé [par exemple le protocole Internet (IP)] caractérisé en ce que le dispositif comprend, pour chaque réseau ou son équipement associé, des moyens de lecture d'une carte à mémoire et un appareil interface comprenant :
- des moyens de chiffrement des messages agencés pour chiffrer les données et au moins partiellement les en-têtes correspondants au protocole de transport (par exemple TCP ou UDP) desdits messages, et des moyens de transfert desdits messages chiffrés, en conservant en clair les en-têtes desdits messages chiffrés permettant leur acheminement via ladite passerelle,
- des moyens d'identification des réseaux ou équipements autorisés associés auxdits appareils interface,
- et des moyens agencés pour déchiffrer les messages chiffrés, en réponse à des signaux générés par les moyens de lecture de carte à mémoire et par les moyens d'identification desdits réseaux ou équipements.

L'appareil interface va pouvoir être associé en direct ou via un réseau protégé, soit à un équipement du type poste, soit à un équipement du type serveur.

Un équipement du type poste est par exemple un micro-ordinateur PC classique muni d'une carte ETHERNET ou une station de travail UNIX. Le dispositif n'autorise alors la communication en mode chiffré de ce poste qu'avec le ou les serveurs ou postes autorisés dont les références ont été introduites dans l'appareil interface.

Un appareil interface associé à un équipement du type serveur permet par contre à ce serveur de communiquer en mode chiffré avec des postes ou autres serveurs enregistrés dans ledit appareil interface, et par exemple en mode non chiffré avec tout autre équipement.

Dans un mode avantageux de réalisation cette dernière possibilité peut être inhibée par une configuration spécifique du dispositif.

L'invention propose également un appareil interface pour dispositif de communication de messages de données du type décrit ci-dessus comprenant :
- des moyens de chiffrement des messages agencés pour chiffrer les données et au moins partiellement les en-têtes correspondants au protocole de transport (par exemple TCP ou UDP) desdits messages,
- des moyens de transfert desdits messages chiffrés, en conservant en clair les en-têtes (par exemple IP) desdits messages chiffrés, permettant leur acheminement via ladite passerelle,
- des moyens d'identification des réseaux ou équipements autorisés associés auxdits appareils interface,
- et des moyens agencés pour déchiffrer les messages chiffrés, en réponse à des signaux générés par des moyens de lecture de carte à mémoire et les moyens d'identification desdits réseaux ou équipements.

Avantageusement l'appareil est plus particulièrement agencé pour être associé à un équipement du type serveur.

L'invention sera mieux comprise à la lecture de la description qui suit de modes de réalisation particuliers donnés à titre d'exemples non limitatifs.

La description se réfère aux dessins qui l'accompagnent dans lesquels :
- La figure 1 montre un dispositif de communication entre équipements appartenant à plusieurs réseaux différents, interconnectés via des passerelles utilisant le protocole Internet, selon un mode de réalisation de l'invention.
- La figure 2 représente le schéma bloc d'un appareil interface selon le mode de réalisation de l'invention plus particulièrement décrit ici.
- La figure 3 montre à titre complémentaire, un poste permettant la programmation des cartes à mémoire utilisables avec l'invention.
- Les figures 4 et 5 montrent le principe connu, utilisé dans le cryptosystème DES mis en oeuvre dans le procédé de l'invention plus particulièrement décrit ici.
- Les figures 6, 7, 8, 9, 10 et 11 donnent pour mémoire la constitution d'une trame Ethernet IP/TCP ou IP/UDP (figure 6), de l'en-tête Ethernet (figure 7), de l'en-tête ISO (figure 8), de l'en-tête IP (figure 9), de l'en-tête TCP (figure 10) et de l'en-tête UDP (figure 11).

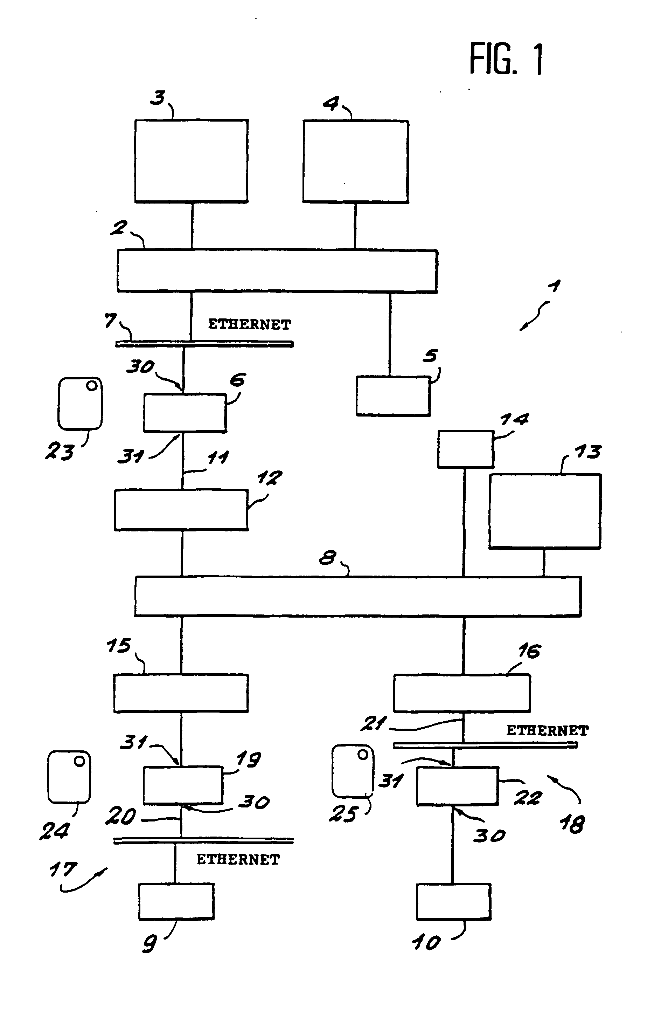

Sur la figure 1 on a représenté un dispositif 1 de communication selon un mode particulier de réalisation de l'invention, entre équipements appartenant à plusieurs réseaux.

Un premier réseau 2 qualifié de réseau sûr, comprend par exemple un premier serveur protégé 3, un second serveur protégé 4, et un poste de travail dit poste de travail privilégié 5.

Un premier appareil interface 6 est connecté au réseau 2 par une liaison Ethernet 7. Il est agencé pour filtrer les messages destinés aux serveurs protégés 3 et 4 arrivant depuis le réseau non sûr 8, et pour autoriser l'accès à ces serveurs protégés pour les postes de travail privilégiés 9 et 10.
L'appareil 6 est connecté au réseau non sûr 8 également par l'intermédiaire d'une liaison Ethernet 11, par exemple via un routeur 12, ou par tout autre équipement disposant d'une interface Ethernet de type DTE (au sens de la norme ISO 8802.3).

Une telle connectique est celle d'un pont, un adaptateur MAU/MAU (non représenté) étant prévu avec l'appareil interface 6 qui est donc placé en coupure sur le cable de descente Ethernet.

L'adaptateur MAU (initiales anglosaxonnes pour Medium Acces Unit) est connu en lui même et réalise notamment les fonctions de codage et décodage des données, la synchronisation et la reconnaissance des trames.

Le réseau non sûr 8 comprend par exemple un serveur non protégé 13 et un poste de travail non privilégié 14. Il est connecté via des routeurs 15 et 16 à deux réseaux 17 et 18.

Le premier réseau 17 est protégé. Il est muni d'un deuxième appareil interface 19 connecté au réseau 17 par liaison Ethernet de façon similaire à ce qu'on a vu précédemment. Le réseau 17 comprend notamment le poste de travail privilégié 9. Dans ce cas l'appareil 19, est donc associé à tout un réseau (réseau 17) qui peut être privilégié.

Le réseau 18 est raccordé au réseau 8 via le routeur 16 par liaison Ethernet 21, comme ci-dessus.

Il comporte le poste 10 interfacé avec le reste du réseau 18 par l'intermédiaire d'un appareil interface 22. Dans ce cas, seul le poste 10 est donc privilégié.

Des cartes à mémoire 23, 24, 25 sont par ailleurs prévues pour valider les appareils interface 6, 19 et 22.
Les remarques suivantes sont également faites en référence à la figure 1 :
- Le poste 5 peut accéder aux serveurs protégés 3 et 4 puisqu'aucun appareil interface ne les sépare. Il ne peut par contre pas accéder au serveur 13 (si celui-ci est actif).
- L'appareil interface 6 sécurise l'accès aux deux serveurs portégés 3 et 4 vis à vis des postes 14, 9 et 10.
- l'appareil interface 19 (respectivement 22) permet au poste de travail 9 (respectivement 10) l'accès aux serveurs 3 et/ou 4 s'il connaît la clé des serveurs 3 et/ou 4.

On va maintenant décrire un appareil interface selon le mode de réalisation de l'invention plus particulièrement évoqué ici.

Comme on l'a vu, les appareils interface sont donc, dans ce cas, des équipements ajoutés au réseau pour sécuriser l'accès à un ou plusieurs serveurs.

Chaque appareil interface comporte un lecteur de carte à microprocesseur, une interface opérateur composée d'un clavier seize touches et d'un afficheur, et deux interfaces Ethernet de type DTE (au sens de la norme ISO 8802.3). Un boîtier d'adaptation MAU/MAU permet de placer l'appareil interface en coupure du câble de descente (câble bleu Ethernet).

Dans le mode de réalisation de l'invention plus particulièrement décrit ici, le rôle de l'appareil interface est d'assurer l'intégrité et la confidentialité des communications utilisant les protocoles DoD IP/TCP et IP/UDP décrits dans les standards RFC 791, RFC 768, RFC 1122, RFC 1166, RFC 1042 (pour mémoire RFC sont les initiales anglosaxonnes de Request For Comments) si et seulement si une procédure d'habilitation utilisant une carte à microprocesseur a été correctement exécutée et si la carte se trouve dans le lecteur de l'appareil interface. Une table interne à l'appareil interface, protégée, comporte des clés DES associées aux adresses IP des émetteurs.

Le principe de traitement des trames dans l'appareil interface, lorsque la procédure d'habilitation est correcte, est donné ci-dessous :
- lorsqu'un datagramme IP transportant un protocole TCP ou UDP est reçu (normalement en clair) sur l'interface 30 (voir figure 1), et si sont trouvées les clés liées aux adresses IP de l'émetteur et du récepteur, une partie des données utilisateur de ce datagramme est chiffrée avec un algorithme DES en utilisant une clé liée à l'adresse IP de l'émetteur. Le datagramme est ensuite émis sur l'interface 31;
- lorsqu'un datagramme IP tranportant un protocole TCP ou UDP est reçu (normalement chiffré) sur l'interface 31, et si sont trouvées les clés liées aux adresses IP de l'émetteur et du récepteur, une partie des données utilisateur de ce datagramme est décryptée avec un algorithme DES en utilisant une clé liée à l'adresse IP de l'émetteur (la même clé que celle ayant servi au chiffrement). Le datagramme est ensuite émis sur l'interface 30;
- les datagrammes IP/TCP ou IP/UDP reçus sur l'une ou l'autre des interfaces (30 ou 31) ayant une adresse IP émetteur ou une adresse IP récepteur pour lesquelles aucune clé ne peut être trouvée, sont jetés ou retransmis en fonction d'un paramètre de configuration "X";
- les autres datagrammes (non IP/TCP ni IP/UDP) reçus sur l'une ou l'autre des interfaces (30 ou 31) sont retransmis sur l'autre interface sans traitement.

Dans le cas où la procédure d'habilitation n'a pas été correctement exécutée ou si aucune carte n'est présente dans le lecteur, un paramètre de configuration "Y" décide :
- de retransmettre sans traitement toutes les trames reçues d'une interface sur l'autre (mode dit poste de travail) ;
- de jeter toutes les trames IP/TCP et IP/UDP reçues (mode dit serveur). Les autres trames sont retransmises sans traitement.

L'appareil interface doit donc :
- assurer les fonctions de sécurité,
- s'interfacer avec l'environnement,
- être initialisé lors de l'installation,
- assurer la modification de certaines données (administration).

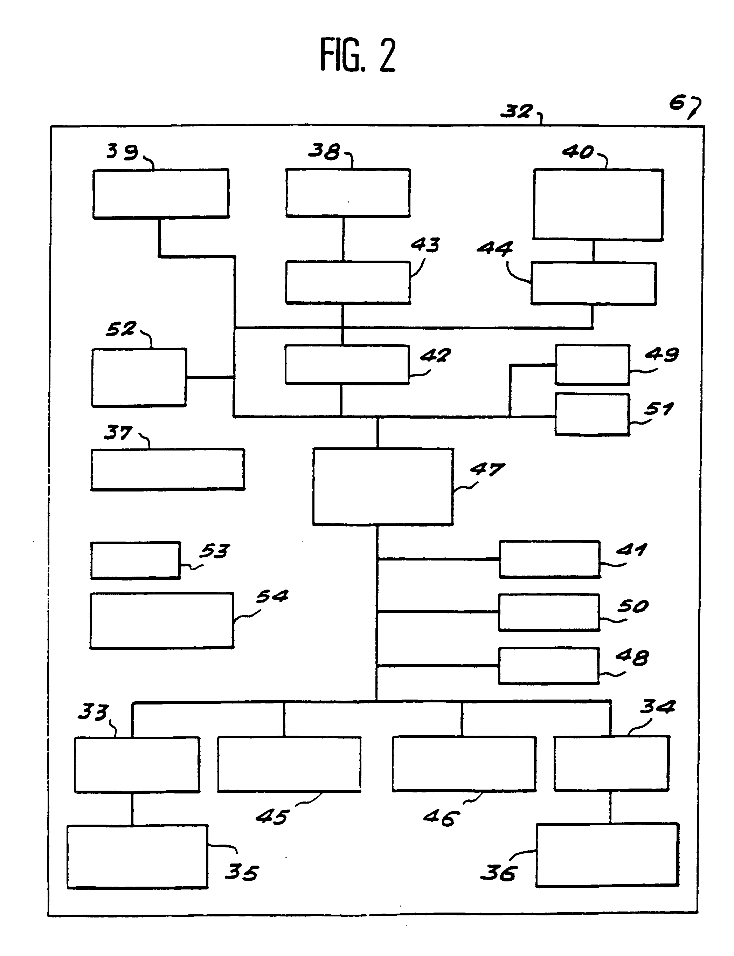

La figure 2 donne un schéma bloc de l'appareil interface 6, 19 ou 22 plus particulièrement décrit ici, de façon non limitative.

Celui-ci comporte un boîtier 32 par exemple métallique, deux interfaces Ethernet 33 et 34 de type DTE, avec deux connecteurs quinze points femelles 35 et 36 (reperés par 30 et 31 sur la figure 1), une alimentation 220 V 50 Hz repérée 37 sur la figure 2, avec interrupteur et fusible (non représentés), un clavier seize touches 38, un afficheur deux lignes de vingt caractères 39, un connecteur 40 de carte à microprocesseur, un câble secteur (non représenté), un câble quinze fils de raccordement Ethernet conforme à la norme ISO 8802.3 (non représenté) et un ou plusieurs processeurs et coprocesseurs avec leur mémoire et périphériques associés référencés 41 à 52 sur la figure 2.
La carte à microprocesseur est par exemple la carte fabriquée par la société française BULL sous la référence catalogue BULL CAM CP8 masque 4.

Egalement et par exemple, l'appareil interface comprend un microprocesseur 41 du type INTEL 80960CA utilisé pour gérer les deux interfaces Ethernet 33 et 34 et un microprocesseur 42 du type INTEL 80C186 utilisé pour gérer les interfaces utilisateurs 43 et 44.

Il est prévu deux coprocesseurs DES 45 et 46 du type CRYPTECH CRY12C102P, fabriqué par la société belge CRYPTECH, 510-512 Chaussée de Louvain, Boîte 18, B-1930 ZAVENTEM, BELGIQUE pour chiffrer et déchiffrer les messages. Chaque coprocesseur est directement relié sur le bus du processeur 80960CA et est vu comme un périphérique.

Deux coprocesseurs supplémentaires (non représentés) du type INTEL 82596CA sont associés au processeur INTEL 80960CA pour gérer les interfaces 33 et 34.

Le dialogue entre un coprocesseur et le processeur 80960CA est réalisé au moyen d'une mémoire partagée 47. Enfin, des mémoires vives (RAM) 48, 49 et mortes (EPROM) 50, 51 sont prévues ainsi qu'un module horaire 52.

Une pile 53 et un dispositif 54 de détection d'ouverture du boîtier 32 complètent l'appareil interface selon le mode de réalisation de l'invention plus particulièrement décrit ici.

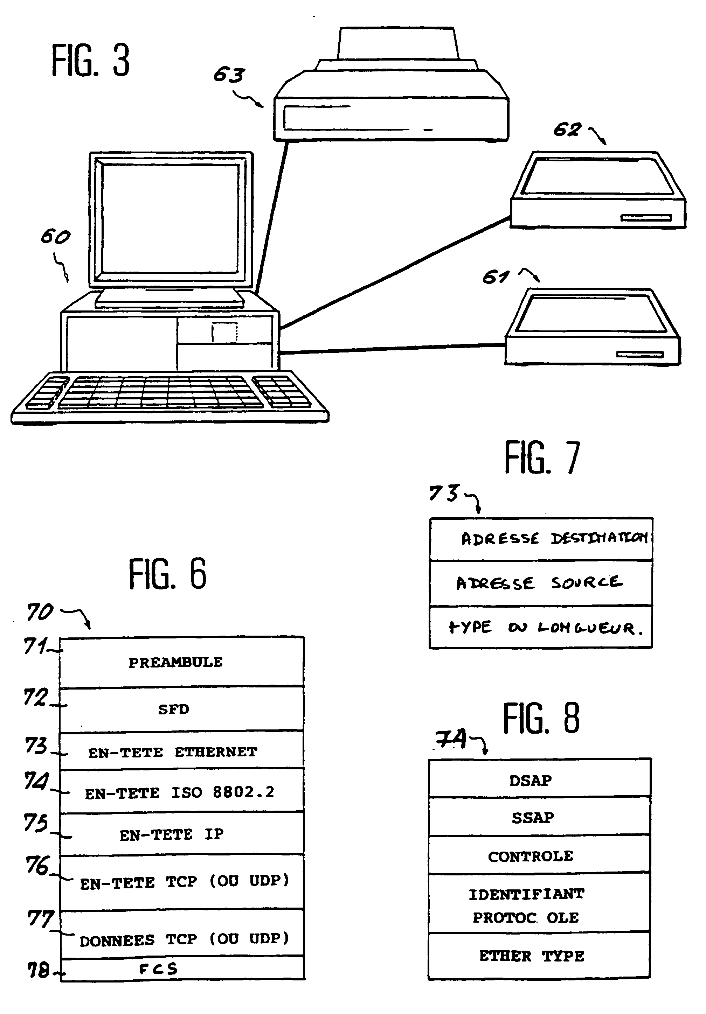

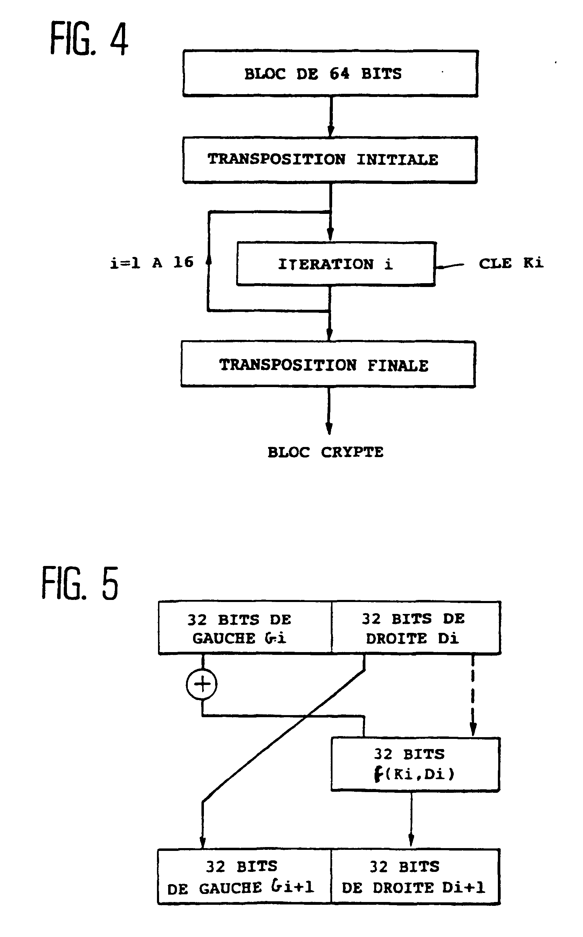

La figure 3 montre à titre complémentaire un poste permettant la programmation des cartes à mémoire de façon connue en soi.

Le poste comprend un micro-ordinateur 60 compatible IBM PC/AT auquel sont reliés deux lecteurs/encodeurs 61 et 62 de cartes à microprocesseur, par exemple du type fabriqué par la société française BULL sous la référence catalogue TLP 224 de BULL CP8 ; et une imprimante 63.

On va maintenant décrire le fonctionnement du dispositif selon l'invention en se référant notamment aux figures 1 à 3 et plus particulièrement à la figure 1 et aux communications entre le réseau 18 et le réseau 2.

L'utilisateur du poste 10 (réseau 18) est identifié par sa carte à microprocesseur 25. Les paramètres vérifiés sont les suivants :
- l'identification du porteur ;
- le type de la carte.

L'identification du porteur est recherchée par exemple parmi une liste de 100 identificateurs, saisie lors de l'installation. Cette liste peut être modifiée par un opérateur autorisé de l'appareil interface 22.

La date de validité lue dans la carte 25 est comparée à la date de l'appareil interface 22. Avantageusement, pour éviter la mise à l'heure à chaque mise sous tension, l'appareil interface possède un module horaire 52 sauvegardé par pile 53.

La date de validité de la carte est saisie par le lecteur/encodeur (61 par exemple) lors de la création de la carte.

L'utilisateur est alors authentifié par son code présent sur la carte à microprocesseur 25.

L'identification et l'authentification sont faites localement dans l'appareil interface 22. En cas de succès, l'appareil interface devient actif jusqu'à l'extraction de la carte. Si un seul paramètre est invalide, l'appareil interface reste inactif.

L'appareil interface 6 associé aux serveurs 3 et 4 identifie ensuite le poste de travail 10 grâce à son adresse IP. En effet, cette adresse est unique.

Ce même appareil interface 6 authentifie le poste de travail 10 en déchiffrant le message reçu.

La clé de déchiffrement est retrouvée dans une table à partir de l'adresse IP de l'émetteur (poste de travail 10 dans ce cas). L'appareil interface 6 associé aux serveurs 3 et 4 possède donc autant de cas de déchiffrement qu'il y a de postes de travail autorisés à accéder aux serveurs associés. Ces clés et ces adresses sont saisies lors de l'installation de l'appareil interface 6.

La clé de chiffrement est retrouvée dans une table à partir de l'adresse IP de l'émetteur (serveur 3 ou 4 dans ce cas). L'appareil interface 6 associé aux serveurs 3 et 4 possède donc autant de clés de chiffrement qu'il y a de serveurs associés à cet appareil interface. Ces clés et ces adresses sont saisies également lors de l'installation de l'appareil interface 6.

L'algorithme de traitement d'une trame reçue est donnée dans le tableau suivant :

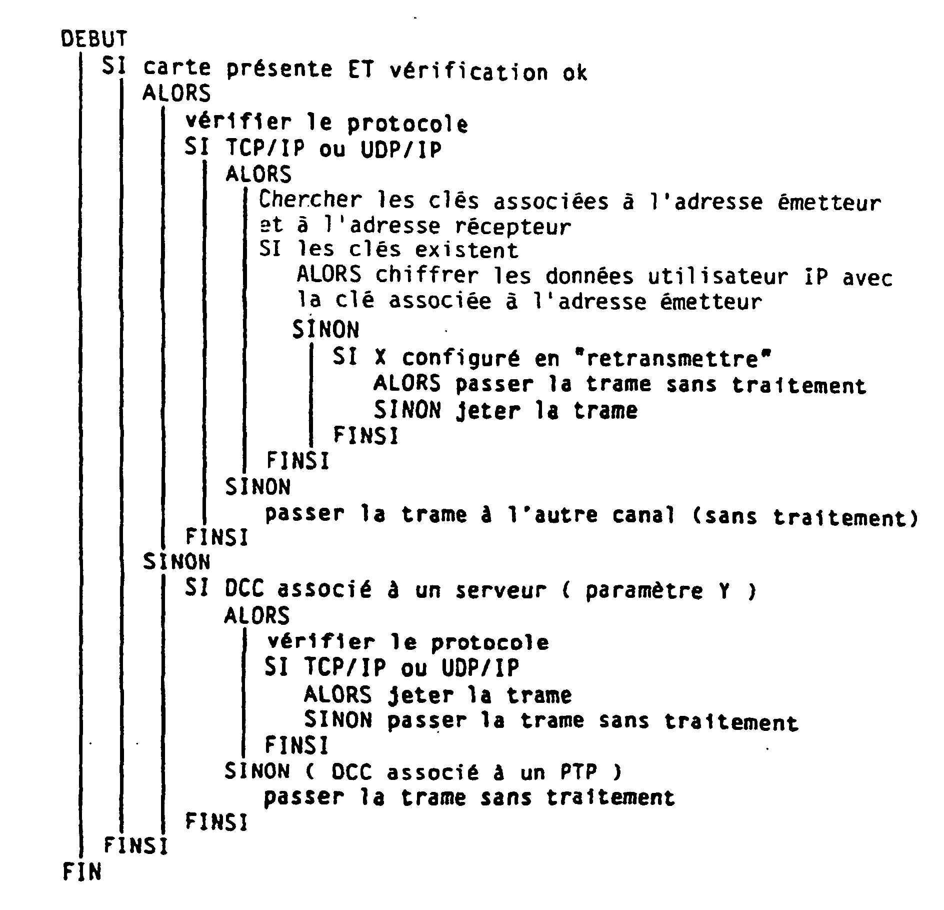

Un cache de une à trois clés peut être prévu de façon connue en elle même, pour éviter les recherches inutiles lorsque plusieurs datagrammes ayant les mêmes adresses arrivent consécutivement.

L'identification et l'authentification du serveur va s'effectuer de façon similaire à ce qui a été précédemment décrit dans le cas de l'identification et de l'authentification du poste de travail.

L'appareil interface 22 associé au poste de travail 10 identifie le serveur 3 (ou 4) grâce à son adresse IP, cette adresse étant unique.

Ce même appareil interface 22 authentifie le serveur en déchiffrant le message reçu.

La clé de déchiffrement est retrouvée dans une table à partir de l'adresse IP du serveur émetteur 3 (ou 4). L'appareil interface 22 associé au poste de travail 10 possède donc autant de clés de déchiffrement qu'il y a de serveurs protégés auxquels il peut accéder (ici deux). La encore ces clés et ces adresses sont saisies lors de l'installation de l'appareil interface 22.

L'algorithme est le même que précédemment.

Un cache de une à trois clés peut également être prévu pour éviter les recherches inutiles lorsque plusieurs datagrammes ayant les mêmes adresses arriveront consécutivement.

Concernant la confidentialité des messages, celle-ci est assurée par le chiffrement à l'émission et le déchiffrement à la réception en utilisant l'algorithme DES (Data Encryption Standard) en mode CBC.

L'algorithme DES est symétrique à clés secrètes. La clé utilisée pour chiffrer une trame est associée à l'adresse IP de l'émetteur.

Comme on l'a vu, un des intérêts du mode CBC réside dans le fait que deux séries identiques consécutives émises de valeurs ne donnent pas deux séries identiques de valeurs chiffrées.

Pour éviter le rejeu frauduleux (replay en terminologie anglosaxonne) d'un échange de message chiffré capturé par écoute passive, il est avantageusement prévu un horodatage du vecteur initial de chiffrement et de déchiffrement, vecteur nécessité par le mode CBC. L'horodatage est assuré par un dispositif d'horloge présent dans chaque équipement.

Autrement dit le vecteur initial varie en fonction du temps.

Pour mémoire, le principe du chiffrement d'un message utilisant l'algorithme DES est transcris ci-après en référence aux figures 4 et 5.

Soit P un message en clair. L'émetteur commence par transcrire le message P sous forme binaire, utilisant pour cela n'importe quel alphabet binaire. Il découpe ensuite son message en blocs de 64 bits et effectue la même opération sur chaque bloc comme le montre la figure 4. Chaque transposition est un simple "mélange" des 64 bits.

Le principe des seize itérations utilisé dans le chiffrement DES est donné dans la figure 5. Les 32 bits de droite Dᵢ₊₁ sont obtenus en ajoutant (opération ou exclusif), les 32 bits de gauche Gᵢ calculés à partir de la clé Kᵢ et des 32 bits Dᵢ.

Le récepteur doit connaître la clé K de 56 bits et utilise exactement le même algorithme à partir du bloc crypté pour le déchiffrer. Il obtient alors le message en clair.

Le chiffrement (déchiffrement) est effectué sur le champ données ainsi que sur une partie de l'en-tête TCP ou UDP. Les champs de l'en-tête utilisés dépendent de la taille du champ de données, puisque l'algorithme DES en mode CBC travaille sur des mots de 64 bits.

Pour mémoire on a représenté sur les figures 6 à 11, les éléments constitutifs d'une trame Ethernet/IP/TCP ou UDP.

La figure 6 montre le format général 70 d'une trame Ethernet.

Cette trame comporte essentiellement un préambule 71, un champ SFD (initiales anglosaxonnes de Start Frame Delimiter) 72, un en-tête Ethernet 73, un en-tête ISO 8802.2 (référence 74), un en-tête IP 75, un en-tête TCP ou UDP 76, des données 77 et un champ FCS (initiales anglosaxonnes de Frame Check Sequence) 78.

L'en-tête ISO 74 n'est pas obligatoirement présent ; en effet il disparaît si la valeur du contenu du champs "type ou longueur" de l'en-tête ETHERNET 73 est supérieure à la valeur 1518 en mode décimal.

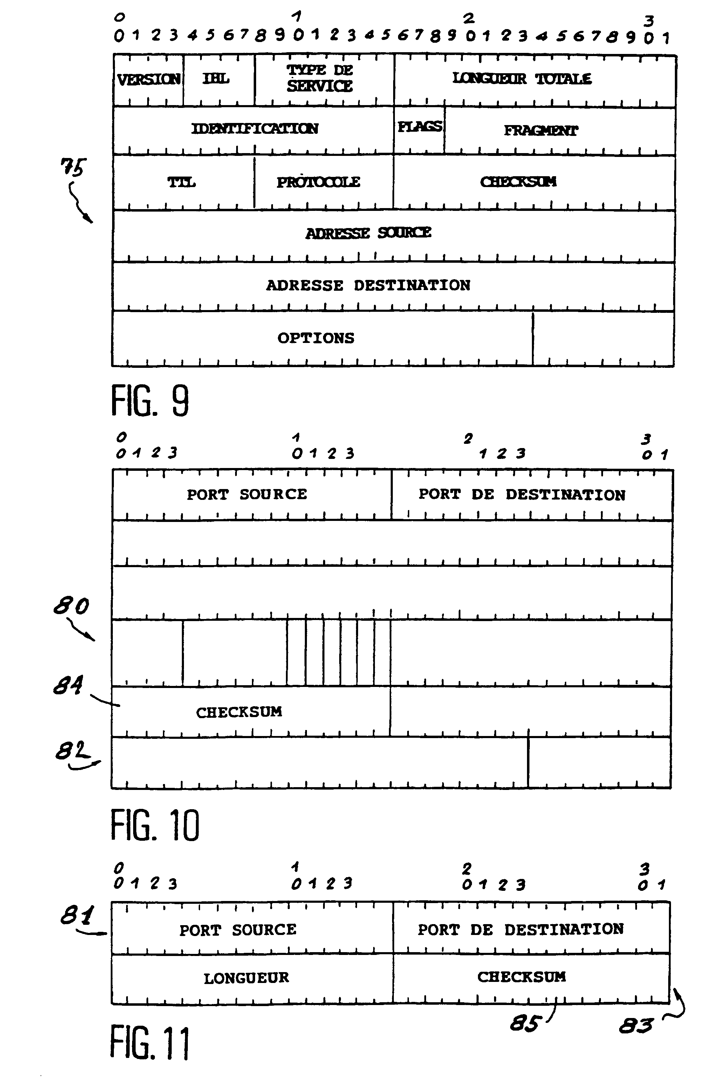

La figure 7 donne l'en-tête Ethernet 73 proprement dit et la figure 8 montre l'en-tête ISO 8802.2 (référencé 74). L'en-tête IP 75 est représenté sur la figure 9. Les en-têtes des figures 7, 8 et 9 sont transmis en clair dans le procédé selon l'invention. Les figures 10 et 11 montrent respectivement les en-têtes TCP 80 et UDP 81.

Seules les parties inférieures respectivement 82 et 83 de ces en-têtes sont chiffrées et avantageusement les parties dites "checksum" 84 et 85 de ces dernières.

Comme il va de soi et comme il résulte de ce qui précède, l'invention concerne également toutes les variantes des procédés et dispositifs décrits rentrant dans le cadre des équivalences.

En particulier le procédé de base consistant à chiffrer la partie "données" d'un message tout en laissant en clair la partie "en-tête" du message permettant son acheminement, peut être utilisée avec d'autres types de protocoles, et notamment avec le protocole réseau spécifié par le standard international "Connectionless Network Protocol" ISO8473. Pour ce faire on tient compte de la longueur des champs d'en-tête IEEE8802.2 et CLNS ISO8473 afin de déterminer le début de la zone de chiffrement/déchiffrement dans chaque message utilisant le protocole ISO8473.

## Revendications

1. Procédé de chiffrement de messages transmis entre réseaux interconnectés via des passerelles utilisant un protocole réseau déterminé, dans lequel on chiffre les messages **caractérisé en ce que**,
le procotole réseau déterminé étant le protocole Internet (IP), et pour permettre l'acheminement des messages via lesdites passerelles,
on chiffre les messages en conservant en clair les en-têtes IP (75) et en chiffrant en même temps que les données (77), au moins une partie (82, 83, 84, 85) des en-têtes (76, 80, 81) correspondant aux protocoles de transport TCP ou UDP utilisés.

2. Procédé selon la revendication 1, **caractérisé en ce que** le cryptosystème utilisé pour le chiffrement des messages étant le système DES, on chiffre l'intégralité des données ainsi que la portion, partielle ou totale, de l'en-tête TCP ou UDP correspondante, afin d'obtenir une chaîne de bits d'une longueur divisible par 64.

3. Procédé selon la revendication 2 **caractérisé en ce que** le système DES est utilisé en mode CBC, le vecteur initial nécessité par ledit mode étant modifié en fonction du temps pour éviter le rejeu frauduleux.

4. Procédé selon l'une quelconque des revendications 2 et 3, **caractérisé en ce que** la portion (82, 83) d'en-tête TCP ou UDP chiffrée comprend la portion dite "checksum" (84, 85).

5. Procédé de traitement de messages transmis entre équipements (3, 4, 9 ,10) appartenant à au moins deux réseaux interconnectés (2 ; 17, 18) comportant chacun au moins un équipement autorisé à émettre et recevoir des messages chiffrés par le procédé de chiffrement selon l'une quelconque des revendications précédentes, le traitement d'un message comportant les étapes suivantes :
- vérification de la présence d'une carte à mémoire (23, 24, 25) d'authentification de l'opérateur du premier équipement (3, 4; 9, 10),
- vérification du protocole utilisé entre les deux équipements, et si le protocole est ledit protocole déterminé, recherche d'une clé associée à l'équipement émetteur et d'une clé associée à l'équipement récepteur,
- si les deux clés existent, chiffrement du message à envoyer, et transmission du message, sinon rejet du message,
- vérification de la présence d'une carte à mémoire d'authentification de l'opérateur du second équipement,
- vérification du protocole utilisé entre les deux équipements, et si le protocole est ledit protocole déterminé, recherche d'une clé associée à l'équipement émetteur et d'une clé associée à l'équipement récepteur,
- si les deux clés existent, déchiffrement du message reçu, sinon rejet du message.

6. Application du procédé selon l'une quelconque des revendications précédentes à la protection des accès aux serveurs (3, 4) de réseaux télématiques.

7. Dispositif (1) de communication de messages de données entre au moins deux équipements (3, 4 ; 9, 10) associés à deux réseaux différents (2 ; 17, 18) interconnectés via au moins une passerelle (8) utilisant un protocole réseau déterminé, **caractérisé en ce que** le dispositif comprend, pour chaque réseau (2, 17) ou son équipement associé (10), un appareil interface (16, 19, 22) comprenant :
- des moyens (41, 42, 45, 46) de chiffrement des messages agencés pour chiffrer les données et au moins partiellement les en-têtes correspondants au protocole de transport desdits messages,
- des moyens (41, 42, 33, 34) de transfert desdits messages chiffrés, en conservant en clair les en-têtes desdits messages chiffrés, permettant leur acheminement par ladite passerelle,
- des moyens (41, 42, 48, 49, 50, 51) d'identification des réseaux ou équipements autorisés associés auxdits appareils interface.

8. Dispositif selon la revendication 7 **caractérisé en ce qu'**il contient également des moyens (41, 42, 45, 46) agencés pour déchiffrer les messages chiffrés, en réponse à des signaux générés par les moyens de lecture de carte à mémoire et les moyens d'identification desdits réseaux ou équipements.

9. Dispositif selon l'une quelconque des revendications 7 ou 8, **caractérisé en ce qu'**il comprend également des moyens (61,62) de lecture d'une carte à mémoire (23,24,25).

10. Dispositif selon l'une quelconque des revendications 7 à 9, **caractérisé en ce que** le protocole réseau déterminé étant le protocole Internet (IP) les en-têtes au moins partiellement chiffrés avec les données correspondent au protocole de transport TCP ou UDP desdits messages.

11. Dispositif selon l'une quelconque des revendications 7 à 9, **caractérisé en ce que** l'appareil interface est agencé pour être associé en direct ou via un réseau protégé, soit à un équipement du type poste, soit à un équipement du type serveur.

12. Dispositif selon l'une quelconque des revendications 7 à 11, **caractérisé en ce que** l'appareil interface est agencé pour soit autoriser soit inhiber ladite association.

13. Appareil interface (6, 19, 22) pour dispositif de communication de messages de données entre au moins deux équipements associés à deux réseaux différents interconnectés via au moins une passerelle utilisant un protocole réseau déterminé, ledit dispositif comprenant, pour chaque réseau ou son équipement associé, des moyens de lecture d'une carte à mémoire, **caractérisé en ce que** ledit appareil comprend :
- des moyens (41, 42, 45, 46) de chiffrement des messages agencés pour chiffrer les données et au moins partiellement les en-têtes correspondants au protocole de transport desdits messages,
- des moyens (41, 42, 33, 34) de transfert desdits messages chiffrés, en conservant en clair les en-têtes desdits messages chiffrés, permettant leur acheminement via ladite passerelle,
- des moyens d'identification (41, 42, 48, 49, 50, 51) des réseaux ou équipements autorisés associés auxdits appareils interface,
- et des moyens (41, 42, 45, 46) agencés pour déchiffrer les messages chiffrés, en réponse à des signaux générés par les moyens (61, 62) de lecture de carte à mémoire et les moyens d'identification desdits réseaux ou équipements.

14. Appareil selon la revendication 13, **caractérisé en ce que** il est agencé pour être associé à un équipement du type serveur.

15. Application de l'appareil interface selon l'une quelconque des revendications 13 et 14 à un réseau de communication utilisant le protocole Internet (IP).

## Claims

1. A method of enciphering messages transmitted between networks interconnected via highways using a specified network protocol, in which the messages are enciphered, the method being **characterized in that**,
the specified network protocol is the Internet protocol (IP), and to enable the messages to be routed via said highways,
the messages are enciphered by keeping the IP headers (75) plain while simultaneously enciphering the data (77) and at least a part (82, 83, 84, 85) of the headers (76, 80, 81) corresponding to the TCP or UDP transport protocols used.

2. A method according to claim 1, **characterized in that** the cryptosystem used for enciphering the messages is the DES system, and all of the data as well as all or some portion of the corresponding TCP or UDP header is enciphered so as to obtain a string of bits with a length that is divisible by 64.

3. A method according to claim 2, **characterized in that** the DES system is used in CBC mode, the initial vector required by the said mode being modified as a function of time in order to avoid fraudulent replay.

4. A method according to claim 2 or claim 3, **characterized in that** the enciphered TCP or UDP header portion (82, 83) comprises the so-called "checksum" portion (84, 85).

5. A method of processing messages transmitted between items of equipment (3, 4, 9, 10) belonging to at least two interconnected networks (2; 17, 18) each including at least one item of equipment authorized to send and receive messages enciphered by the method of enciphering according to any preceding claim, the processing of a message including the following steps:
- verifying the presence of a memory card (23, 24, 25) for authentication of the operator of the first item of equipment (3, 4; 9, 10),
- verifying the protocol used between the two items of equipment, and if the protocol is the said specified protocol, searching for a key associated with the sender equipment and for a key associated with the receiver equipment,
- if the two keys exist, enciphering the message to be dispatched, and transmitting the message, otherwise rejecting the message,
- verifying the presence of a memory card for authentication of the operator of the second item of equipment,
- verifying the protocol used between the two items of equipment, and if the protocol is the said specified protocol, searching for a key associated with the sender equipment and for a key associated with the receiver equipment,
- if the two keys exist, deciphering the message received, otherwise rejecting the message.

6. The use of the method according to any preceding claim for protecting access to the servers (3, 4) of remote computer networks.

7. A device (1) for communicating data messages between at least two items of equipment (3, 4; 9, 10) associated with two different networks (2; 17, 18) interconnected via at least one highway (8) using a specified network protocol, **characterized in that** the device comprises, for each network (2, 17) or its associated item of equipment (10), an interface apparatus (16, 19, 22) comprising:
- message enciphering means (41, 42, 45, 46) configured for enciphering the data and at least part of the headers corresponding to the transport protocol for the said messages,
- means (41, 42, 33, 34) for transferring the said enciphered messages, whilst keeping the headers of the said enciphered messages plain, allowing them to be routed via the said highway,
- means (41, 42, 48, 49, 50, 51) for identifying networks or authorized items of equipment associated with the said interface apparatuses.

8. A device according to claim 7, **characterized in that** it also contains means (41, 42, 45, 46) configured for deciphering the enciphered messages, in response to signals generated by the memory-card reading means and the means of identifying the said networks or items of equipment.

9. A device according to either one of claims 7 or 8, **characterized in that** it also comprises means (61, 62) of reading a memory card (23, 24, 25).

10. A device according to any one of claims 7 to 9, **characterized in that** the specified network protocol is the Internet protocol (IP), and the headers which are at least partially enciphered with the data correspond to the TCP or UDP transport protocol for the said messages.

11. A device according to any one of claims 7 to 9, **characterized in that** the interface apparatus is configured so as to be associated directly or via a protected network, either with an item of equipment of the station type, or with an item of equipment of the server type.

12. A device according to any one of claims 7 to 11, **characterized in that** the interface apparatus is configured so as either to authorize or prohibit the said association.

13. Interface apparatus (6, 19, 22) for a device for communicating data messages between at least two items of equipment associated with two different networks interconnected via at least one highway using a specified network protocol, the said device comprising, for each network or its associated item of equipment, means of reading a memory card,
**characterized in that**,
the said apparatus comprises:
- message enciphering means (41, 42, 45, 46) configured for enciphering the data and at least partially the headers corresponding to the transport protocol for the said messages,
- means (41, 42, 33, 34) for transferring the said enciphered messages, whilst keeping the headers of the said enciphered messages plain, allowing them to be routed via the said highway,
- means (41, 42, 48, 49, 50, 51) for identifying networks or authorized items of equipment associated with the said interface apparatuses,
- and means (41, 42, 45, 46) configured for deciphering the enciphered messages, in response to signals generated by the memory-card reading means (61, 62) and the means for identifying the said networks or items of equipment.

14. Apparatus according to claim 13, **characterized in that** it is configured so as to be associated with an item of equipment of the server type.

15. The use of the interface apparatus according to claim 13 or claim 14 in a communications network using the Internet protocol (IP).

## Patentansprüche

1. Verfahren zur Verschlüsselung von Mitteilungen, die zwischen Netzen übertragen werden, die über Schnittstellen miteinander verbunden sind, wobei ein bestimmtes Netzprotokoll verwendet wird, in dem die Mitteilungen verschlüsselt werden, **dadurch gekennzeichnet, dass** das bestimmte Netzprotokoll das Internetprotokoll (IP) ist und zum Ermöglichen des Transports von Mitteilungen über die genannten Schnittstellen die Mitteilungen so verschlüsselt werden, dass die IP-Anfangsblöcke (75) normal erhalten bleiben und gleichzeitig mit den Daten (77) mindestens ein Teil (82, 83, 84, 85) der Anfangsblöcke (76, 80, 81) verschlüsselt werden, die den verwendeten Transportprotokollen TCP oder UDP entsprechen.

2. Verfahren nach Anspruch 1, **dadurch gekennzeichnet, dass** das für die Verschlüsselung von Mitteilungen verwendete Verschlüsselungssystem das System DES ist, die gesamten Daten sowie der Teil, teilweise oder ganz, des Anfangsblocks des entsprechenden TCP oder UDP verschlüsselt wird, um eine Kette von Bits mit einer durch 64 teilbaren Länge zu erhalten.

3. Verfahren nach Anspruch 2, **dadurch gekennzeichnet, dass** das DES-System im CBC-Modus verwendet wird, wobei der durch den Modus benötigte initiale Vektor in Abhängigkeit von der Zeit zur Vermeidung von Missbrauch modifiziert wird.

4. Verfahren nach einem der Ansprüche 2 und 3, **dadurch gekennzeichnet, dass** der verschlüsselte Teil (82, 83) des Anfangsblocks von TCP oder UDP den Teil umfasst, der "Checksum" (84, 85) genannt wird.

5. Verfahren zur Behandlung von zwischen Anlagen (3, 4, 9, 10) übertragenen Mitteilungen, die mindestens zwei miteinander verbundenen Netzen (2; 17, 18) angehören, deren jedes mindestens eine Anlage umfasst, die zum Senden und Empfangen von durch das Verschlüsselungsverfahren nach einem der vorhergehenden Ansprüche verschlüsselten Daten zugelassen ist, wobei die Behandlung einer Mitteilung die folgenden Schritte umfasst:
- Verifizierung des Vorhandenseins einer Speicherkarte (23, 24, 25) zur Authentifizierung der Bedienungsperson der ersten Anlage (3, 4; 9, 10),
- Verifizierung des zwischen den beiden Anlagen verwendeten Protokolls, und wenn das Protokoll das bestimmte Protokoll ist, Suche eines der Senderanlage zugeordneten Schlüssels und eines der Empfängeranlage zugeordneten Schlüssels,
- wenn die beiden Schlüssel vorhanden sind, Verschlüsselung der zu sendenden Mitteilung und Übertragung der Mitteilung, ansonsten Zurückweisung der Mitteilung,
- Verifizierung des Vorhandenseins einer Speicherkarte zur Authentifizierung der Bedienungsperson der zweiten Anlage,
- Verifizierung des zwischen den beiden Anlagen verwendeten Protokolls, und wenn das Protokoll das bestimmte Protokoll ist, Suche eines der Senderanlage zugeordneten Schlüssels und eines der Empfängeranlage zugeordneten Schlüssels,
- wenn die beiden Schlüssel vorhanden sind, Entschlüsselung der empfangenen Mitteilung, ansonsten Zurückweisung der Mitteilung.

6. Anwendung des Verfahrens nach einem der vorhergehenden Ansprüche zum Schutz des Zugangs zu Servern (3, 4) von Telematiknetzen.

7. Vorrichtung (1) zur Kommunikation von Datenmitteilungen zwischen mindestens zwei Anlagen (3, 4; 9, 10), die zwei verschiedenen Netzen (2; 17, 18) angehören, die über mindestens eine Schnittstelle (8) unter Verwendung eines bestimmten Netzprotokolls verbunden sind, **dadurch gekennzeichnet, dass** die Vorrichtung für jedes Netz (2, 17) oder die zugeordnete Anlage (10) ein Schnittstellengerät (16, 19, 22) aufweist, das umfasst:
- Mittel (41, 42, 45, 46) zum Verschlüsseln von Mitteilungen, die geeignet sind zum Verschlüsseln von Daten und mindestens teilweise der entsprechenden Anfangsblöcke im Transportprotokoll der Mitteilungen,
- Mittel (41, 42, 33, 34) zum Übertragen der verschlüsselten Mitteilungen, wobei die Anfangsblöcke der verschlüsselten Mitteilungen normal erhalten sind, was ihren Transport durch die Schnittstelle erlaubt,
- Mittel (41, 42, 48, 49, 50, 51) zur Identifizierung der zugelassenen Netze oder Anlagen, die den Schnittstellengeräten zugeordnet sind.

8. Vorrichtung nach Anspruch 7, **dadurch gekennzeichnet, dass** sie gleichermaßen Mittel (41, 42, 45, 46) enthält, die zum Entschlüsseln der verschlüsselten Mitteilungen geeignet sind, in Reaktion auf durch die Lesemittel der Speicherkarte und die Identifizierungsmittel der Netze oder Anlagen erzeugte Signale.

9. Vorrichtung nach Anspruch 7 oder 8, **dadurch gekennzeichnet, dass** sie gleichermaßen Mittel (61, 62) zum Lesen einer Speicherkarte (23, 24, 25) aufweist.

10. Vorrichtung nach einem der Ansprüche 7 bis 9, **dadurch gekennzeichnet, dass** das bestimmte Netzprotokoll das Internetprotokoll (IP) ist, wobei die mindestens teilweise verschlüsselten Anfangsblöcke mit den Daten den Transportprotokollen TCP und UDP der Mitteilungen entsprechen.

11. Vorrichtung nach einem der Ansprüche 7 bis 9, **dadurch gekennzeichnet, dass** das Schnittstellengerät geeignet ist zum Zuordnen direkt oder über ein Schutznetz entweder an eine Teilnehmeranlage oder eine Serveranlage.

12. Vorrichtung nach einem der Ansprüche 7 bis 11, **dadurch gekennzeichnet, dass** das Schnittstellengerät geeignet ist entweder zum Zulassen oder Sperren der Zuordnung.

13. Schnittstellengerät (6, 19, 22) für Kommunikationsvorrichtungen für Datenmitteilungen zwischen mindestens zwei Anlagen, die zwei verschiedenen Netzen angehören, die über mindestens eine Schnittstelle unter Verwendung eines bestimmten Netzprotokolls miteinander verbunden sind, wobei die Vorrichtung für jedes Netz oder zugehörige Anlage Lesemittel einer Speicherkarte umfasst, **dadurch gekennzeichnet, dass** das Gerät umfasst:
- Mittel (41, 42, 45, 46) zum Verschlüsseln von Mitteilungen geeignet zum Verschlüsseln von Daten und mindestens teilweise der entsprechenden Anfangsblöcke entsprechend dem Transportprotokoll der Mitteilungen,
- Mittel (41, 42, 33, 34) zum Übertragen der verschlüsselten Mitteilungen, wobei die Anfangsblöcke der verschlüsselten Mitteilungen normal erhalten sind, wobei ihr Transport über die Schnittstelle ermöglicht ist,
- Identifizierungsmittel (41, 42, 48, 49, 50, 51) der zugelassenen Netze oder Anlagen, die den Schnittstellengeräten angehören,
- und Mittel (41, 42, 45, 46) geeignet zum Entschlüsseln der verschlüsselten Mitteilungen, in Reaktion auf Signale, die durch die Lesemittel (61, 62) der Speicherkarte und Identifizierungsmittel der Netze oder Anlagen erzeugt sind.

14. Gerät nach Anspruch 13, **dadurch gekennzeichnet, dass** es zum Zuordnen zu einer Anlage vom Typ eines Servers geeignet ist.

15. Anwendung des Schnittstellengeräts nach einem der Ansprüche 13 und 14 bei einem Kommunikationsnetz, das das Internetprotokoll (IP) verwendet.
